# EUROPÄISCHE PATENTSCHRIFT

(11) **EP 2 160 818 B1**
(45) Veröffentlichungstag und Bekanntmachung des Hinweises auf die Patenterteilung: **28.12.2016**
(21) Anmeldenummer: 08750025.2
(22) Anmeldetag: 05.05.2008
(51) Int. Cl.: H02K 11/25, H02K 3/50

(54) **STATOR EINES ELEKTROMOTORS MIT TEMPERATURWÄCHTERN UND SCHALTSCHEIBE DIESEN TEMPERATURWÄCHTERN**
ELECTRIC MOTOR STATOR COMPRISING TEMPERATURE SENSORS AND WIRING RING COMPRISING THESE TEMPERATURE SENSORS
STATOR D'UN MOTEUR ÉLECTRIQUE COMPORTANT DES DÉTECTEURS DE TEMPÉRATURE ET ANNEAU DE CONNEXION COMPRENANT LESDITES DÉTECTEURS DE TEMPÉRATURE

(30) Priorität: 24.05.2007 DE 202007007391 U
(43) Veröffentlichungstag der Anmeldung: 10.03.2010
(73) Patentinhaber: ebm-papst Mulfingen GmbH & Co. KG, 74673 Mulfingen (DE)
(72) Erfinder: ZIERLEIN, Rainer, 97999 Igersheim (DE); BEST, Dieter, 74653 Ingelfingen (DE); FIEDLER, Erich, 91616 Neusitz (DE)
(74) Vertreter: Peter, Julian
(86) Internationale Anmeldenummer: PCT/EP2008/055462
(87) Internationale Veröffentlichungsnummer: WO 2008/141911

(56) Entgegenhaltungen:
- EP-A- 0 727 864
- EP-A- 1 727 261
- WO-A-02/071579
- DE-A1- 3 229 711
- DE-U1- 29 817 869
- GB-A- 2 148 610

## Beschreibung

Die vorliegende Erfindung betrifft einen Stator für einen Elektromotor, insbesondere für einen Außenläufermotor, nach dem Oberbegriff des Anspruchs 1.

Ein solcher Stator ist Gegenstand der EP 1 727 261 A1. Dabei wird der Temperaturwächter an der dem Wickelkopf zugewandten Unterseite der Schaltscheibe mittels seiner Anschlussdrähte durch Einrasten fixiert, wozu die Schaltscheibe auf der Unterseite Fixierelemente zur Aufnahme und klemmenden Halterung der Anschlussdrähte aufweist. Daher muss der Temperaturwächter vor der Montage der Schaltscheibe von deren Unterseite her eingesetzt werden. Erst dann kann die Schaltscheibe zusammen mit dem Temperaturwächter montiert werden. In der montierten Position liegt dann der Temperaturwächter wickelkopfseitig in wärmeleitendem Anlagekontakt mit der Statorwicklung zwischen dieser und der Schaltscheibe. Dabei ist der Temperaturwächter mit einer federelastischen Andruckkraft beaufschlagt, wozu die Schaltscheibe im Bereich des Temperaturwächters einen die Andruckkraft erzeugenden Federarm aufweist.

Ein weiterer Stator ist in der EP 0 993 095 A1/B1 beschrieben. Bei diesem bekannten Stator ist das Statorblechpaket an seinen beiden Stirnseiten sowie innerhalb von Statornuten, durch die die Statorwicklung gewickelt ist, mit einer isolierenden Kunststoffmasse umspritzt, die beidseitig eine Stirnisolation - dort "Isolier-Endscheiben" genannt - bildet. Auf einer Seite ist eine an die Endscheibe einstückig angeformte Aufnahme vorgesehen, in die ein Temperaturwächter axial eingesetzt ist. Der Temperaturwächter ist als Sicherungselement der Statorwicklung elektrisch in Reihe vorgeschaltet. Zum Verschalten von Wicklungsdrähten sowie von Anschlussdrähten des Temperaturwächters ist eine Verschaltungsanordnung mit mindestens einer Mehrfach-Kontaktkammer vorgesehen, die durch Teilkammern einerseits einer der Endscheiben und andererseits einer zusätzlichen wickelkopfseitig aufgesetzten Verdrahtungsplatte gebildet ist. In den Kontaktkammern sind Kontaktelemente in Form von Schneidklemmkontakten angeordnet. Die Verdrahtungsplatte weist im Bereich des Temperaturwächters eine Durchgangsöffnung sowie auf ihrer Oberseite Fixiereiemente zur klemmenden Halterung der Anschlussdrähte des Temperaturwächters auf.

Die Herstellung bzw. Montage des bekannten Stators erfolgt, indem die Wicklungsdrahtenden durch jeweils eine der Kontaktkammern geführt und dort durch Einsetzen von Schneidklemmkontakten kontaktiert werden. Es können dann Anschlussleitungen in die jeweiligen Kontakte eingedrückt werden. Der Temperaturwächter wird axial in die Aufnahme der Endscheibe eingesteckt, und seine Anschlussdrähte werden über die Verdrahtungsplatte geführt und dort fixiert sowie mit ihren Enden in entsprechende Schneidklemmkontakte eingeführt und dadurch kontaktiert.

Die EP 0 727 864 B1 beschreibt eine Verschaltungsanordnung für einen Elektromotor, wobei an einem scheibenförmigen Basisteil Verbinderelemente gehaltert sind, die zum Anschluss der Statorwicklungsdrahtenden jeweils eine Anschlussfahne mit einer Klemmzunge für das jeweilige Drahtende aufweisen. Dabei ist eine besondere Aufnahme- und Kontaktanordnung für einen knopfartigen, nach Art einer Knopfbatterie ohne Anschlussleitungen ausgebildeten Temperaturwächter vorgesehen, wobei diese Anordnung es ermöglicht, den Motor wahlweise mit oder ohne Temperaturwächter zu montieren. Dazu weist das Basisteil eine Aufnahme für den Temperaturwächter mit einem speziellen Kontaktfederelement auf, mit dem entweder der in die Aufnahme eingesetzte Temperaturwächter oder ein anstelle des Temperaturwächters zu verwendendes Verbinderelement kontaktiert werden kann. In einer Bodenwandung der Aufnahme ist eine Lochöffnung derart gebildet, dass der in der Aufnahme sitzende Temperaturwächter durch die Lochöffnung hindurch mit der Wärme der Statorwicklung beaufschlagt wird, und zwar nur mittelbar über einen Kontaktabschnitt eines Verbinderelementes und gegebenenfalls über eine zusätzliche Schaltungsisolation. Hierdurch ist der Wärmeübergang nicht optimal.

Aus der WO 02/071579 A1 ist eine Vorrichtung zum Verbinden und Isolieren einer thermischen Schutzvorrichtung für elektrische Windungen von Motoren bekannt. Eine solche Vorrichtung besitzt ein Gehäuse, in dem eine thermische Schutzvorrichtung anordenbar ist, wobei zur Fixierung der thermischen Schutzvorrichtung ein Deckel des Gehäuses zu verschließen oder ein zweites Gehäusebauteil über der thermischen Schutzvorrichtung anzuordnen ist. Eine derartige Vorrichtung bedarf einer Vielzahl von Einzelteilen und ist aufwendig in der Montage.

Aus der GB 2148610 A ist eine Anordnung zum Verbinden von Kabelenden von Statorwindungen eines elektrischen Motors mit Hilfe einer Verbindungseinrichtung bekannt. Die Verbindungseinrichtung besitzt eine Ausnehmung für einen Temperaturwächter, welcher radial in diese Ausnehmung einführbar ist.

Aus der DE 3229711 A1 ist eine Verschaltungsplatte bekannt, welche einen Aufnahmeraum für einen Temperatursensor besitzt.

Aus der DE 29817869 A1 ist eine Verdrahtungsplatte bei einem Außenläufermotor bekannt. Die Verdrahtungsplatte bildet mit einer Verschaltungsanordnung mindestens eine Mehrfach-Kontaktkammer.

Der vorliegenden Erfindung liegt die Aufgabe zugrunde, bei einem Stator der eingangs beschriebenen Art die Herstellung und Montage weiter zu vereinfachen.

Erfindungsgemäß wird dies durch die Merkmale des Anspruchs 1 erreicht. Vorteilhafte Ausgestaltungsmerkmale der Erfindung sind Gegenstand der abhängigen Ansprüche.

Demnach ist der Temperaturwächter erfindungsgemäß derart in einer Durchgangsöffnung der Schaltscheibe gehalten, dass er von der der Statorwicklung abgewandten Oberseite der Schaltscheibe her zwecks Anlagekontakt mit der Statorwicklung durch einfaches Einführen in die Durchgangsöffnung montierbar ist. Hierbei sitzt der Temperaturwächter zweckmäßig verschiebbar in der Durchgangsöffnung und ist auf der Oberseite der Schaltscheibe von einem Federelement mit einer in Richtung der Statorwicklung wirkenden Andruckkraft beaufschlagt. Um zunächst den Temperaturwächter in die Durchgangsöffnung einsetzen zu können, ist das Federelement ein separates Einzelteil, und es wird nach dem Einsetzen des Temperaturwächters auf der Oberseite der Schaltscheibe insbesondere über Rastmittel befestigt.

Weiterhin sind in der Schaltscheibe zwei gleichartige Temperaturwächter mit einem bestimmten Abstand voneinander gehalten. Dabei ist den zwei Temperaturwächtern ein gemeinsames Doppelfederelement zugeordnet, welches mit zwei endseitigen Federelementen je einen der Temperaturwächter beaufschlagt.

In weiterer vorteilhafter Ausgestaltung sitzt jeder Temperaturwächter in einem taschenartigen Aufnahmeteil, so dass er einerseits mittelbar über das Aufnahmeteil verschiebbar in der Durchgangsöffnung der Schaltscheibe gehalten ist sowie andererseits auch mittelbar über eine Bodenwandung des Aufnahmeteils an der Statorwicklung zur Anlage kommt. Das Aufnahmeteil kann ein separat geformtes Teil, insbesondere ein Kunststoff-Formteil sein, es kann aber auch unmittelbar an den Temperaturwächter angeformt sein.

Weitere Ausgestaltungsmerkmale werden in der folgenden Beschreibung noch genauer erläutert werden.

Anhand eines bevorzugten, in der Zeichnung veranschaulichten Ausführungsbeispiels soll im Folgenden die Erfindung genauer erläutert werden. Dabei zeigen:
- Fig. 1: eine axiale Ansicht (Draufsicht in Richtung der Motorachse) eines erfindungsgemäßen Stators auf dessen Rotorseite (Rotor nicht dargestellt),
- Fig. 2: einen axialen bzw. achsparallelen Schnitt in der Ebene II-II gemäß Fig. 1,
- Fig. 3: eine stark vergrößerte Detailansicht des Bereichs III gemäß Fig. 2 zur Erläuterung der Anordnung der Temperaturwächter,

- Fig. 4: eine Ansicht wie in Fig. 3, jedoch mit ungeschnittener Darstellung (Seitenansicht) eines Temperaturwächters,
- Fig. 5: eine Perspektivansicht von Bestandteilen des erfindungsgemäßen Stators,
- Fig. 6: eine Perspektivansicht einer Schaltscheibe nach der Erfindung, und zwar auf ihre dem Statorblechpaket zugewandte Seite (Statorseite),
- Fig. 7: eine Perspektivansicht der Schaltscheibe auf die vom Statorblechpaket wegweisende Seite (Flanschseite), und

Fig. 8 eine Ausschnittvergrößerung eines Bereichs aus Fig. 7.

In den verschiedenen Figuren der Zeichnung sind gleiche Teile stets mit den gleichen Bezugszeichen versehen und brauchen daher in der Regel auch jeweils nur einmal beschrieben zu werden.

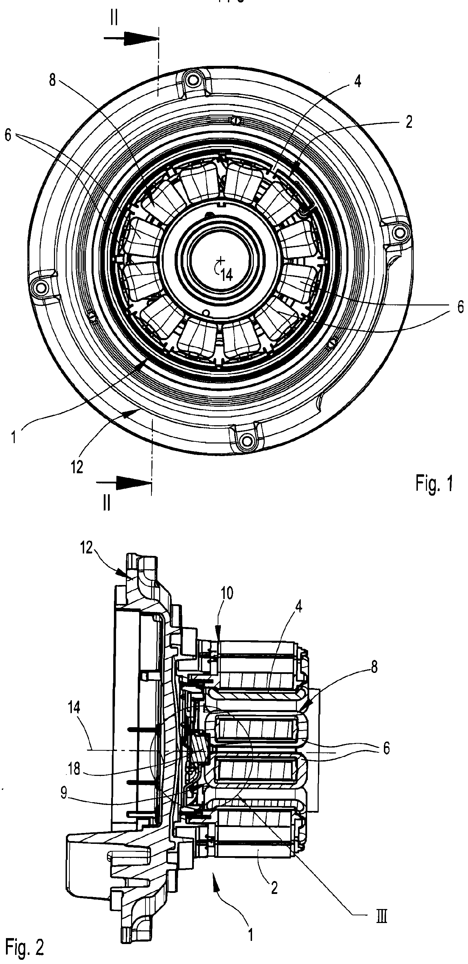

Wie sich zunächst aus den Fig. 1 bis 5 ergibt, besteht ein erfindungsgemäßer Stator 1 aus einem Statorblechpaket 2 mit Statornuten 4, durch die jeweils Teilwicklungen 6 einer Statorwicklung 8 verlaufen. Das aus geschichteten Blechlamellen bestehende Statorblechpaket 2 ist an seinen beiden Stirnseiten sowie innerhalb der Nuten mit einem isolierenden Kunststoffmaterial umspritzt. Dies dient einerseits zur Isolierung der Teilwicklungen 6 innerhalb der Statornuten 4 und andererseits zur Isolierung des sogenannten Wickelkopfes 9 im Bereich der Stirnseiten gegenüber dem Statorblechpaket 2. Bei diesem Teil der Isolierung des wickelkopfseitigen Bereiches handelt es sich um jeweils eine Stirnisolation 10.

Das mit der Statorwicklung 8 bewickelte Statorblechpaket 2 ist auf einer Stirnseite mit einem Motorflansch 12 fest verbunden. Dieser Motorflansch 12 erstreckt sich im Wesentlichen senkrecht zu einer Motorachse 14. In der bevorzugten Ausgestaltung für einen Elektro-Außenläufermotor wird das bewickelte Statorblechpaket 2 von seiner anderen, dem Motorflansch 12 gegenüberliegenden Stirnseite her von einem nicht dargestellten, topf- oder glockenförmigen Außenläufer umschlossen.

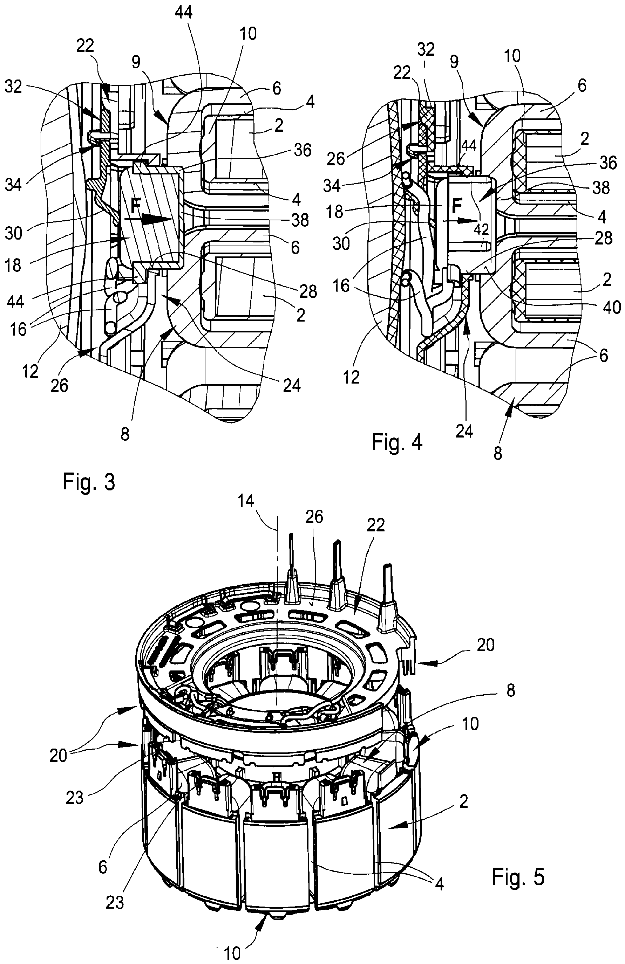

Der Stator 1 weist ferner zum elektrischen Verschalten von nicht bezeichneten Wicklungsdrahtenden der Statorwicklung 8 bzw. der Teilwicklungen 6 sowie von Anschlussdrähten 16 zwei der Statorwicklung 8 in Reihe vorgeschalteten Temperaturwächter 18 (s. Fig. 2, 3, 4, 7 und 8) eine Verschaltungsanordnung 20 auf (Fig. 5). Diese Verschaltungsanordnung 20 ist auf der Seite des Motorflansches 12 zwischen diesem und dem bewickelten Statorblechpaket 2 angeordnet. Wie sich aus

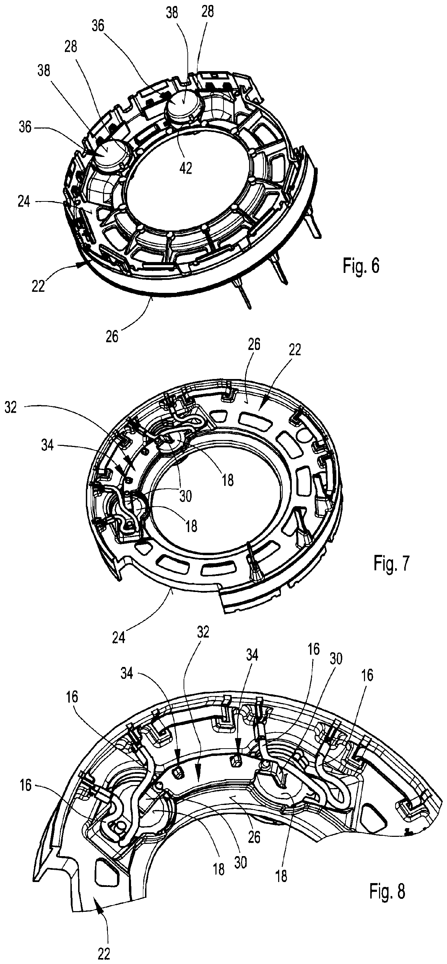

Fig. 6 bis 8 ergibt, sind zwei gleichartige Temperaturwächter 18 mit einem bestimmten Abstand voneinander vorgesehen.

Die Verschaltungsanordnung 20 weist gemäß Fig. 5 eine den Bereich des flanschseitigen Wickelkopfes 9 des bewickelten Statorblechpaketes 2 insbesondere kappenartig übergreifende, isolierende Schaltscheibe 22 sowie im Wickelkopfbereich am Statorblechpaket 2 in isolierenden Taschen angeordnete Kontaktelemente 23 (insbesondere Schneidklemmkontakte) auf. Die Schaltscheibe 22 weist eine zentrische Öffnung für eine Motorwelle bzw. für eine zugehörige Wellenlagerung auf (nicht dargestellt), so dass sie im Wesentlichen ringscheibenförmig ausgebildet ist. Jeder Temperaturwächter 18 ist derart integriert in der Schaltscheibe 22 gehalten, dass er wickelkopfseitig in wärmeleitendem Anlagekontakt mit der Statorwicklung 8 in der Schaltscheibe 22 sitzt. Hierzu wird insbesondere auf die vergrößerten Darstellungen in Fig. 3 und 4 verwiesen. Die Schaltscheibe 22 weist eine der Statorwicklung 8 und den Wickelkopf 9 zugewandte Unterseite 24 (Statorseite) und eine gegenüberliegende, dem Motorflansch 12 zugewandte Oberseite 26 (Flanschseite) auf. Dazu wird auf Fig. 5 bis 8 verwiesen.

Erfindungsgemäß ist nun vorgesehen, dass jeder Temperaturwächter 18 derart in einer Durchgangsöffnung 28 der Schaltscheibe 22 gehalten ist, dass er von der Oberseite (Flanschseite) 26 der Schaltscheibe 22 her zwecks Anlagekontakt mit der Statorwicklung 8 bzw. dem Wickelkopf 9 durch einfaches Einführen in die Durchgangsöffnung 28 montierbar ist. Hierbei sitzt jeder Temperaturwächter 18 in axialer bzw. achsparalleler Richtung verschiebbar in der Durchgangsöffnung 28, wobei er auf der Oberseite 26 der Schaltscheibe 22 von einem Federelement 30 mit einer in Richtung der Statorwicklung 8 wirkenden Andruckkraft F beaufschlagt ist. Hierzu wird insbesondere auf Fig. 3 und 4 verwiesen. Im Falle der vorgesehenen zwei Temperaturwächter 18 ist diesen zweckmäßigerweise ein gemeinsames Doppelfederelement 32 zugeordnet (s. insbesondere Fig. 7 und 8), welches mit zwei endseitigen Federelementen 30 je einen der Temperaturwächter 18 beaufschlagt. Dabei ist es vorteilhaft, wenn das Federelement 30 bzw. das Doppelfederelement 32 auf der Oberseite 26 der Schaltscheibe 22 insbesondere über Rastmittel 34 befestigt bzw. befestigbar ist.

Durch die erfindungsgemäße Ausgestaltung wird jeder Temperaturwächter 18 von der Oberseite 26 der Schaltscheibe 22 in die jeweilige Durchgangsöffnung 28 eingesetzt. Dies kann auch bei bereits montierter Schaltscheibe 22 erfolgen. Nach dem Einsetzen jedes

Temperaturwächters 18 erfolgt die Montage des Federelementes 30 bzw. Doppelfederelementes 32 durch einfaches Aufrasten auf die Schaltscheibe 22.

In weiterer vorteilhafter Ausgestaltung ist jeder Temperaturwächter 18 in einem taschenartigen, becherförmigen Aufnahmeteil 36 angeordnet, wozu wiederum auf die vergrößerten Darstellungen in Fig. 3 und 4 verwiesen wird. Jeder Temperaturwächter 18 ist somit einerseits mittelbar über das Aufnahmeteil 36 verschiebbar in der jeweiligen Durchgangsöffnung 28 der Schaltscheibe 22 gehalten und kommt andererseits auch mittelbar über eine Bodenwandung 38 des Aufnahmeteils 36 an der Statorwicklung 8 zur Anlage. Deshalb besteht das Aufnahmeteil 36 zumindest im Bereich der Bodenwandung 38 vorzugsweise aus einem gut wärmeleitfähigen Material.

Bei der dargestellten Ausführungsform handelt es sich bei dem Aufnahmeteil 36 um ein separat geformtes Teil, insbesondere ein Kunststoff-Formteil. In einer bevorzugten Ausführung kann das Aufnahmeteil 36 aber auch unmittelbar an den Temperaturwächter 18 angeformt (angespritzt) sein.

Wie sich weiterhin aus Fig. 4 ergibt, weist das Aufnahmeteil 36 außenseitig an einer zylindrischen Umfangswandung 40 mindestens ein insbesondere rippenartiges und achsparallel ausgerichtetes Führungselement 42 auf, welches zur Sicherung gegen Verdrehen in eine nicht erkennbare korrespondierende Ausnehmung im Innenbereich der Durchgangsöffnung 28 eingreift.

Wie sich weiterhin aus Fig. 3 und 4 ergibt, weist das Aufnahmeteil 36 in zweckmäßiger Ausgestaltung in einem von der Bodenwandung 38 abgewandten Bereich der Umfangswandung 40 mindestens ein Anschlagelement 44 derart auf, dass jeder Temperaturwächter 18 bzw. das Aufnahmeteil 36 nur bis zu einem Endanschlag in Richtung der Statorwicklung 8 durch die Durchgangsöffnung 28 einschiebbar ist, wenn die Schaltscheibe 22 noch nicht mit der Statorwicklung 8 bzw. dem Statorblechpaket 2 verbunden ist. Der Endanschlag ist so ausgelegt, dass jeder Temperaturwächter 18 bzw. die Bodenwandung 38 des Aufnahmeteils 36 in der montierten Lage der Schaltscheibe 22 jedenfalls durch die elastische Andruckkraft F zur Anlage an der Statorwicklung 8 kommt; in dieser Stellung ist das Anschlagelement 44 folglich noch vom Endanschlag beabstandet.

Der elektrische Anschlusskontakt der Anschlussdrähte 16 jedes Temperaturwächters 18 kann grundsätzlich auf beliebige Weise erfolgen, beispielsweise mittelbar über zusätzliche, z. B. angelötete oder angekrimpte Kontaktelemente, wie Flachstecker oder dergleichen. In der dargestellten, besonders vorteilhaften Ausführungsform sind allerdings die Anschlussdrähte 16 jedes Temperaturwächters 18 unmittelbar in Schneidklemmtechnik angeschlossen. Die Kontaktierung der in den Zeichnungsfiguren nicht erkennbaren Wicklungsdrahtenden der Statorwicklung 8 erfolgt ebenfalls über Schneidklemmkontakte 40.

Weitere Einzelheiten der Verschaltungsanordnung 20 und der Schaltscheibe 22 ergeben sich aus der eingangs schon erwähnten EP 1 727 261 A1, auf deren Inhalt deshalb an dieser Stelle in vollem Umfang Bezug genommen wird.

## Patentansprüche

1. Stator (1) für einen Elektromotor mit einem mit einer Statorwicklung (8) versehenen Statorblechpaket (2) und mit einer auf einer Stirnseite im Bereich eines Wickelkopfes (9) der Statorwicklung (8) angeordneten Verschaltungsanordnung (20) zum elektrischen Verschalten von Wicklungsdrahtenden der Statorwicklung (8) und von Anschlussdrähten (16) eines der Statorwicklung (8) vorgeschalteten Temperaturwächters (18), wobei die Verschaltungsanordnung (20) eine den Bereich des Wickelkopfes (9) übergreifende, isolierende Schaltscheibe (22) aufweist und der Temperaturwächter (18) derart integriert in der Schaltscheibe (22) gehalten ist, dass er wickelkopfseitig in wärmeleitendem Anlagekontakt mit der Statorwicklung (8) in der Schaltscheibe (22) sitzt, wobei
der Temperaturwächter (18) derart in einer Durchgangsöffnung (28) der Schaltscheibe (22) gehalten ist, dass er von einer der Statorwicklung (8) abgewandten Oberseite (26) der Schaltscheibe (22) her zwecks Anlagekontakt mit der Statorwicklung (8) montierbar ist,
**dadurch gekennzeichnet, dass** in der Schaltscheibe (22) zwei gleichartige Temperaturwächter (18) mit einem bestimmten Abstand voneinander gehalten sind und den zwei Temperaturwächtern (18) ein gemeinsames Doppelfederelement (32) zugeordnet ist, das mit zwei Federelementen (30) je einen der Temperaturwächter (18) beaufschlagt.

2. Stator nach Anspruch 1,
**dadurch gekennzeichnet, dass** der Temperaturwächter (18) verschiebbar in der Durchgangsöffnung (28) sitzt und auf der Oberseite (26) der Schaltscheibe (22) von einem Federelement (30) mit einer in Richtung der Statorwicklung (8) wirkenden Andruckkraft (F) beaufschlagt ist.

3. Stator nach Anspruch 2,
**dadurch gekennzeichnet, dass** das Doppelfederelement (32) als separates Einzelteil auf der Oberseite (26) der Schaltscheibe (22) insbesondere über Rastmittel (34) befestigt oder befestigbar ist.

4. Stator nach einem der Ansprüche 1 bis 3,
**dadurch gekennzeichnet, dass** der/jeder Temperaturwächter (18) in einem taschenartigen Aufnahmeteil (36) sitzt und einerseits mittelbar über das Aufnahmeteil (36) verschiebbar in der Durchgangsöffnung (28) der Schaltscheibe (22) gehalten ist sowie andererseits auch mittelbar über eine Bodenwandung (38) des Aufnahmeteils (36) an der Statorwicklung (8) zur Anlage kommt.

5. Stator nach Anspruch 4,
**dadurch gekennzeichnet, dass** das Aufnahmeteil (36) außenseitig an einer Umfangswandung (40) mindestens ein insbesondere rippenartiges Führungselement (42) aufweist, das zur Sicherung gegen Verdrehen in eine korrespondierende Ausnehmung im Innenbereich der Durchgangsöffnung (28) eingreift.

6. Stator nach Anspruch 4 oder 5,
**dadurch gekennzeichnet, dass** das Aufnahmeteil (36) in einem von der Bodenwandung (38) abgewandten Bereich der Umfangswandung (40) mindestens ein Anschlagelement (44) derart aufweist, dass der Temperaturwächter (18) bzw. das Aufnahmeteil (36) nur bis zu einem Endanschlag in Richtung der Statorwicklung (8) durchschiebbar ist.

7. Stator nach einem der Ansprüche 1 bis 6,
**dadurch gekennzeichnet, dass** der Temperaturwächter (18) eine flache, knopfartige Form mit gegenüberliegenden, zu einer Motorachse (14) etwa senkrecht verlaufenden Stirnflächen und einem Umfangsrand aufweist, wobei die Anschlussdrähte (16) insbesondere von dem Umfangsrand ausgehen.

8. Stator nach Anspruch 7,
**dadurch gekennzeichnet, dass** die Anschlussdrähte (16) des Temperaturwächters (18) mit Kontaktabschnitten in Schneidklemmtechnik unmittelbar oder mittelbar über zusätzliche Kontaktelemente, wie Flachstecker oder dergleichen, angeschlossen sind.

9. Schaltscheibe (22) für einen Stator (1) eines Elektromotors der ein mit einer Statorwicklung (8) versehenes Statorblechpaket (2) besitzt und eine auf eine Stirnseite im Bereich eines Wickelkopfes (9) der Statorwicklung (8) angeordnete Verschaltungsanordnung (20) zum elektrischen Verschalten von Wicklungsdrahtenden der Statorwicklung (8) und von Anschlussdrähten (16) eines der Statorwicklung (8) vorgeschalteten Temperaturwächters (18) aufweist, wobei im bestimmungsgemäßen Gebrauch die Verschaltungsanordnung (20) die Schaltscheibe (22) aufweist, welche isolierend ausgebildet ist und im bestimmungsgemäßen Gebrauch den Bereich des Wickelkopfes (9) übergreift, und der Temperaturwächter (18) derart integriert in der Schaltscheibe (22) gehalten ist, dass er wickelkopfseitig in wärmeleitenden Anlagekontakt mit der Statorwicklung (8) bringbar in der Schaltscheibe (22) sitzt,
wobei der Temperaturwächter (18) im bestimmungsgemäßen Gebrauch derart in einer Durchgangsöffnung (28) der Schaltscheibe (22) gehalten ist, dass er von einer der Statorwicklung (8) abgewandten Oberseite (26) der Schaltscheibe (22) her zwecks Anlagekontakt mit der Statorwicklung (8) montierbar ist, **dadurch gekennzeichnet, dass** in der Schaltscheibe (22) zwei gleichartige Temperaturwächter (18) mit einem bestimmten Abstand voneinander gehalten sind und den zwei Temperaturwächtern (18) ein gemeinsames Doppelfederelement (32) zugeordnet ist, das mit zwei Federelementen (30) je einen der Temperaturwächter (18) beaufschlagt.

10. Elektromotor, insbesondere Außenläufermotor, mit einem Stator (1) nach einem der Ansprüche 1 bis 8 und mit einem insbesondere glockenartigen, das bewickelte Statorblechpaket (2) übergreifenden Rotor.

## Claims

1. Stator (1) for an electric motor having a stator laminate stack (2) provided with a stator winding (8) and having an interconnection arrangement (20) arranged on a front side in the area of a winding head (9) of said stator winding (8) for electrical interconnection of winding wire ends of said stator winding (8) and of connecting wires (16) of a temperature monitor (18) upstream of said stator winding (8), said interconnection arrangement (20) having an isolating switching disk (22) overlapping the area of said winding head (9), and said temperature monitor (18) being held integrated in said switching disk (22) in such way that it is positioned in thermo-conductive electrical contact with said stator winding (8) in said switching disk (22) on the side of the winding head,
said temperature monitor (18) being held in a passage opening (28) of said switching disk (22) in such way, that it is mountable from an upper side (26) of said switching disk (22), which is averted from said stator winding (8), for the purpose of electrical contact with said stator winding (8),
**characterized in that** two similar temperature monitors (18) with a specific distance from each other are held in said switching disk (22) and that a common double spring element (32) is associated to said two temperature monitors (18), which element biases one of said temperature monitors (18), each, with two spring elements (30).

2. Stator according to claim 1,
**characterized in that** said temperature monitor (18) is positioned adjustably in said passage opening (28) and is biased by a spring element (30) with a contact pressure (F) operating in the direction of said stator winding (8) on the upper side (26) of said switching disk (22).

3. Stator according to claim 2,
**characterized in that** said double spring element (32) is affixed or affixable as a separate component part on said upper side (26) of said switching disk (22), in particular by means of locking means (34).

4. Stator according to one of the claims 1 to 3,
**characterized in that** said/any temperature monitor (18) is positioned in a pocket-like receiving part (36) and is held in said passage opening (28) indirectly moveable via said receiving part (36) of the switching disk (22), on the one hand, and achieves electrical contact via a bottom wall (38) of said receiving part (36) at said stator winding (8), on the other hand.

5. Stator according to claim 4,
**characterized in that** said receiving part (36) has at least one particularly rib-like guiding element (42) at an outer side of a circumferential wall (40), which element engages with a corresponding recess in the inner area of said passage opening (28) to secure against twisting.

6. Stator according to claim 4 or 5,
**characterized in that** said receiving part (36) has at least one stop element (44) in an area of said circumferential wall (40), which is averted from said bottom wall (38), in such way that said temperature monitor (18) or said receiving part (36) can be passed through in the direction of said stator winding (8) only up to an end stop.

7. Stator according to one of the claims 1 to 6,
**characterized in that** said temperature monitor (18) has a flat, button-like form with opposing front faces, which extend approximately perpendicular to a motor axis (14), and a circumferential margin, whereby said connecting wires (16) particularly extend from said circumferential margin.

8. Stator according to claim 7,
**characterized in that** said connecting wires (16) of said temperature monitor (18) are directly or indirectly connected with contact portions in insulation displacement technology via additional contact elements, such as flat connectors or the like.

9. Switching disk (22) for a stator (1) of an electric motor having a stator laminate stack (2) provided with a stator winding (8) and having an interconnection arrangement (20) arranged on a front side in the area of a winding head (9) of said stator winding (8) for electrical interconnection of winding wire ends of said stator winding (8) and of connecting wires (16) of a temperature monitor (18) upstream of said stator winding (8), said interconnection arrangement (20), when used as intended, having said switching disk (22), which is formed insulating and overlaps the area of said winding head (9), when used as intended, and said temperature monitor (18) being held in said switching disk (22) in such way that it is positioned in thermo-conductive electrical contact with said stator winding (8) in said switching disk (22) on the side of the winding head,
said temperature monitor (18), when used as intended, being held in a passage opening (28) of said switching disk (22) in such way, that it is mountable from an upper side (26) of said switching disk (22), which is averted from said stator winding (8), with said stator winding (8) for the purpose of electrical contact,
**characterized in that** two similar temperature monitors (18) with a specific distance from each other are held in said switching disk (22) and that a common double spring element (32) is associated to said two temperature monitors (18), which element biases one of said temperature monitors (18), each, with two spring elements (30).

10. Electric motor, in particular an external rotor motor, having a stator (1) according to one of the claims 1 to 8 and with a particularly bell-like rotor, which overlaps said wound stator laminate stack (2).

## Revendications

1. Stator (1) pour un moteur électrique avec un paquet de tôle de stator (2) pourvu d'un enroulement de stator (8) et avec un agencement de câblage (20) agencé sur un côté avant dans la zone d'une tête d'enroulement (9) de l'enroulement de stator (8) pour le câblage électrique d'extrémités de fil d'enroulement de l'enroulement de stator (8) et de fils de raccordement (16) d'un contrôleur de température (18) monté en amont de l'enroulement de stator (8), l'agencement de câblage (20) présentant un disque de commutation (22) isolant, recouvrant la zone de la tête d'enroulement (9) et le contrôleur de température (18) étant maintenu de manière intégrée dans le disque de commutation (22) de telle manière qu'il loge côté tête d'enroulement en contact d'appui thermoconducteur avec l'enroulement de stator (8) dans le disque de commutation (22),
le contrôleur de température (18) étant maintenu dans une ouverture de passage (28) du disque de commutation (22) de telle manière qu'il puisse être monté depuis un côté supérieur (26) éloigné de l'enroulement de stator (8) du disque de commutation (22) en vue du contact d'appui avec l'enroulement de stator (8),
**caractérisé en ce que** dans le disque de commutation (22), deux contrôleurs de température (18) similaires sont maintenus à une certaine distance l'un de l'autre et un élément de ressort double (32) commun est associé aux deux contrôleurs de température (18), lequel sollicite avec deux éléments de ressort (30) l'un des contrôleurs de température (18).

2. Stator selon la revendication 1,
**caractérisé en ce que** le contrôleur de température (18) loge de manière mobile dans l'ouverture de passage (28) et est sollicité sur le côté supérieur (26) du disque de commutation (22) par un élément de ressort (30) avec une force de pressage (F) agissant en direction de l'enroulement de stator (8).

3. Stator selon la revendication 2,
**caractérisé en ce que** l'élément de ressort double (32) est ou peut être fixé comme partie individuelle séparée sur le côté supérieur (26) du disque de commutation (22) en particulier par le biais des moyens d'encliquetage (34).

4. Stator selon l'une quelconque des revendications 1 à 3,
**caractérisé en ce que** le/chaque contrôleur de température (18) loge dans une partie de réception (36) de type poche et est maintenu d'une part indirectement de manière mobile par la partie de réception (36) dans l'ouverture de passage (28) du disque de commutation (22) ainsi que vient en appui d'autre part aussi indirectement par une paroi de fond (38) de la partie de réception (36) contre l'enroulement de stator (8).

5. Stator selon la revendication 4,
**caractérisé en ce que** la partie de réception (36) présente côté extérieur sur une paroi périphérique (40) au moins un élément de guidage (42) de type nervure en particulier qui s'engage pour la protection contre la rotation dans un évidement correspondant dans la zone intérieure de l'ouverture débouchante (28).

6. Stator selon la revendication 4 ou 5,
**caractérisé en ce que** la partie de réception (36) présente, dans une zone éloignée de la paroi de fond (38) de la paroi périphérique (40), au moins un élément de butée (44) de telle manière que le contrôleur de température (18) ou la partie de réception (36) puisse être inséré jusqu'à une butée d'extrémité en direction de l'enroulement de stator (8).

7. Stator selon l'une quelconque des revendications 1 à 6,
**caractérisé en ce que** le contrôleur de température (18) présente une forme de type bouton, plate avec des surfaces avant s'étendant à peu près perpendiculairement à un axe de moteur (14), en regard et un bord périphérique, les fils de raccordement (16) sortant en particulier du bord périphérique.

8. Stator selon la revendication 7,
**caractérisé en ce que** les fils de raccordement (16) du contrôleur de température (18) sont raccordés avec des sections de contact dans la technique à borne guillotine directement ou indirectement par des éléments de contact supplémentaires tels que des fiches plates ou similaires.

9. Disque de commutation (22) pour un stator (1) d'un moteur électrique qui possède un paquet de tôle de stator (2) pourvu d'un enroulement de stator (8) et un agencement de câblage (20) agencé sur un côté avant dans la zone d'une tête d'enroulement (9) de l'enroulement de stator (8) pour le câblage électrique d'extrémités de fil d'enroulement de l'enroulement de stator (8) et de fils de raccordement (16) d'un contrôleur de température (18) monté en amont de l'enroulement de stator (8), l'agencement de câblage (20) présentant dans l'utilisation selon les dispositions le disque de commutation (22) qui est réalisé de manière isolante et recouvre dans l'utilisation selon les dispositions la zone de la tête d'enroulement (9), et le contrôleur de température (18) étant maintenu de manière intégrée dans le disque de commutation (22) de telle manière qu'il puisse être amené côté tête d'enroulement en contact d'appui thermoconducteur avec l'enroulement de stator (8) dans lequel loge le disque de commutation (22),
le contrôleur de température (18) étant maintenu dans l'utilisation selon les dispositions dans une ouverture de passage (28) du disque de commutation (22) de telle manière qu'il puisse être monté depuis un côté supérieur (26) éloigné de l'enroulement de stator (8) du disque de commutation (22) en vue du contact d'appui avec l'enroulement de stator (8),
**caractérisé en ce que** dans le disque de commutation (22), deux contrôleurs de température similaires (18) sont maintenus à une distance déterminée l'un de l'autre et un élément de ressort double (32) commun est associé aux deux contrôleurs de température (18), lequel sollicite avec deux éléments de ressort (30) l'un des contrôleurs de température (18).

10. Moteur électrique, en particulier moteur à rotor extérieur avec un stator (1) selon l'une quelconque des revendications 1 à 8 et avec un rotor recouvrant le paquet de tôle de stator enroulé (2), en particulier de type cloche.
